# EUROPEAN PATENT SPECIFICATION

(11) **EP 4 196 774 B1**
(45) Date of publication and mention of the grant of the patent: **10.12.2025**
(21) Application number: 21759146.0
(22) Date of filing: 30.07.2021
(51) Int. Cl.: G01N 21/952, A24C 5/34, G01B 11/10, G01N 21/47, G01N 21/84

(54) **METHOD AND DEVICE FOR INSPECTING TUBULAR ELEMENTS, IN PARTICULAR MULTI-LAYER TUBULAR ELEMENTS**
VERFAHREN UND VORRICHTUNG ZUR INSPEKTION VON ROHRFÖRMIGEN ELEMENTEN, INSBESONDERE VON MEHRLAGIGEN ROHRFÖRMIGEN ELEMENTEN
PROCÉDÉ ET DISPOSITIF D'INSPECTION D'ÉLÉMENTS TUBULAIRES, EN PARTICULIER D'ÉLÉMENTS TUBULAIRES MULTICOUCHES

(30) Priority: 12.08.2020 IT 202000020029
(43) Date of publication of application: 21.06.2023
(73) Proprietor: G.D S.p.A., 40133 Bologna (IT)
(72) Inventor: BRUNIATO, Luca, 40133 Bologna (IT); DATTILO, Giancarlo, 40133 Bologna (IT); FERRARI, Marco, 40133 Bologna (IT); MENGOLI, Fausto, 40133 Bologna (IT); ROMAGNOLI, Massimo, 40133 Bologna (IT); COCCOLINI, Davis, 40133 Bologna (IT); TRENTINI, Stefano, 40133 Bologna (IT); BIGNAMI, Mirco, 40133 Bologna (IT); MARCHESINI, Daniele, 40133 Bologna (IT); GAMBERINI, Giuliano, 40133 Bologna (IT)
(74) Representative: Bianciardi, Ezio
(86) International application number: PCT/IB2021/056954
(87) International publication number: WO 2022/034425

(56) References cited:
- EP-A1- 2 677 273
- EP-A2- 0 704 172
- EP-A2- 0 843 974
- DE-A1- 19 642 793
- GB-A- 2 115 144
- GB-A- 2 176 598
- US-A- 3 980 567
- US-B1- 6 407 807

## Description

### Technical field

This invention relates to a method and a device for inspecting tubular elements, in particular, but not limited to, the sector of smoke or aerosol generating articles (tobacco or related sectors - cigars, cigarettes, electronic cigarettes and the like).

More specifically, the invention is applicable in the field of inspection of multi-layer tubular elements, comprising at least two superposed layers such as, for example, what are known as "filter tubes".

### Background art

The prior art, in particular in the above mentioned sector of smoke or aerosol generating articles, teaches the use of tubular elements comprising an outer layer, made of paper material, and an inner layer, made of filter material, connected to each other to form a single tubular structure.

These tubular elements are obtained by cutting a continuous tubular element, which may in turn be made by superposing two webs which are then progressively wrapped round each other in a forming beam. The two webs, which may be joined to each other by an adhesive, are thus superposed and concentric in the continuous tubular element.

To divide the continuous tubular element into individual tubular elements of desired length, cutting units are known which are provided with a rotary blade holder on which one or more blades are mounted to periodically impact and sever the continuous tubular element.

This cutting action may sometimes cause the two layers to separate, for example, if the blade is not sharp enough, if the two layers are not well joined to each other or for other reasons dependent on the production process. This leads to the production of tubular elements where the inner (filtering) layer is not perfectly circular in cross section but has an irregular profile and is partly detached from the outer circular layer.

This makes the tubular element unsuitable for further processing and must therefore be rejected.

In some prior art inspection stations, defective tubular elements to be rejected are detected by cameras which are mounted in such a way as to axially face the tubular elements as they advance transversally to their axes. Disadvantageously, such inspection stations raise problems of size and installation constraints connected with the presence of the cameras, which require ample spaces to allow them to be installed.

In this context, the basic technical purpose of this invention is to provide a method and a device for inspecting tubular elements, in particular multi-layer tubular elements, to overcome the above mentioned disadvantages of the prior art.

The documents EP 0 704 172 A2 and US 6 407 807 B1 disclose inspection systems for inspecting end-faces of cigarettes by using a camera and by using image processing.

The documents GB 2 176 598 A, EP 0 843 974 A2, GB 2 115 144 A and US 3 980 567 A disclose inspection systems for inspecting end-faces of cigarettes by using fiber optic detectors.

The document DE 196 42 793 A1 discloses an inspection system for inspecting end-faces of cigarettes using detectors, whereby the signals of the detectors are compared to a threshold in order to determine defective positions.

In particular, this invention has for an aim to provide a method and a device for inspecting tubular elements, in particular multi-layer tubular elements, allowing inspection to be carried out in reduced spaces.

Another aim of this invention is to provide a method and a device for inspecting tubular elements, in particular multi-layer tubular elements, which allow attaining a high level of installation versatility, especially in terms of its positioning within the production plant.

### Disclosure of the invention

The technical purpose indicated and the aims specified are substantially achieved by a method and a device for inspecting tubular elements, in particular multi-layer tubular elements, comprising the technical features set out in claims 1 and 7, respectively, and/or in one or more of the appended claims.

The method comprises the following steps:
- feeding a tubular element transversely to its main axis of extension (of circular symmetry) through an inspection station comprising at least one detector, in such a way that as the tubular element advances, the detector faces an end portion of the tubular element, in particular an annular face of it perpendicular to the axis of the tubular element;
- detecting the end portion of the tubular element by means of the detector as the tubular element advances through a detection zone in front of the detector;
- generating, using the detector, a signal identifying the detection performed.

According to the invention, the detector comprises an optical fibre sensor positioned in such a way that its detection axis is substantially parallel to the axis of the tubular element. The step of generating the signal is carried out using the detector to generate a signal representing the walls of the tubular element and, in particular, at least one of the following: number of walls detected by the detector; thickness of the walls; position and/or mutual distance between the walls.

In effect, according to the method of the invention, the signal comprises a time and/or space curve (analogue or digital) representing the trend of the intensity of reading performed by the detector over the entire period in which the end portion of the tubular element moves past the front of the detector. The curve obtained with this method has a number of peaks equal to the number of times the detector intercepts a wall of the tubular element: the wider (larger) the peak, the thicker the wall.

The invention also comprises processing the signal to identify at least one (preferably all) of the following:
- number of peaks of the curve;
- amplitude of the peaks of the curve;
- position and/or distance between the peaks of the curve.

Comparing the number of peaks with a reference value makes it possible to determine whether the tubular element meets minimum acceptability quality requirements. If the reference value for the number of peaks is set at two, that is to say, the number of walls expected to pass in front of the detector if the tubular element is conformant, detecting a number of peaks greater than two indicates, generally speaking, that the higher than expected number of walls detected is due to internal crumpling or other unwanted and undesirable irregularities. In this situation, a tubular element is non conformant and must be rejected.

Comparing the amplitude and/or the position and/or the mutual distance of the peaks with respective reference intervals makes it possible, in this case too, to determine whether or not the tubular element meets minimum acceptability quality requirements. In effect, peaks of insufficient amplitude may be caused, for example, by the absence of one of the two layers (for example, the inner filtering layer) or peaks that are too close together may be due to the flattening of the cross section of the tubular element as a whole or to the presence of an irregularity inside the tubular element.

Preferably, the detection station comprises a plurality of detectors positioned in such a way as to detect respective parallel bands of the tubular element as the tubular element is fed forward transversely.

In an embodiment, the detectors are aligned in a direction perpendicular to the feed direction of the tubular element so they all perform detection on the same tubular element at the same time.

In a different embodiment, the detectors are disposed in such a way as to perform detection on successive tubular elements at the same time instant. In this case, therefore, the detectors are staggered from each other along the feed direction of the tubular element. Preferably, there are three detectors.

Preferably, the step of processing the signal to obtain qualitative information regarding the structural integrity of the tubular element is carried out for each of the detectors. The method comprises subjecting the tubular element to a further step, preferably a rejection step, if at least one of the detectors detects qualitative information of insufficient structural integrity.

Preferably, the step of detecting the end portion of the tubular element is performed by adjusting the mutual position between the detector and the tubular element along the axis of the tubular element and/or perpendicularly to the axis of the tubular element in depth and/or height relative to the tubular element, respectively, to cover different sizes.

According to the invention, a device for inspecting tubular elements, in particular multi-layer tubular elements, comprises a conveyor, preferably in the form of a drum, equipped with peripheral seats for feeding a succession of tubular elements transversely to the main axes of extension of the tubular elements along a feed path, and an inspection station positioned on the feed path and comprising at least one detector positioned and/or configured in such a way that during the feeding of the tubular elements the detector faces an end portion of each tubular element.

The detector comprises an optical fibre sensor having a detection axis which is substantially parallel to the axes of the tubular element.

Advantageously, the optical fibre sensor comprises one or more focusing lenses for determining a field depth of the detection

That way, only the zone at the end of the tubular element is inspected, and not the zone further in, which might contain filling material of the tubular element and which might alter the detection of the walls but which, being outside focus, does not appreciably affect the measurement.

Furthermore, the detector is configured to generate a signal representing the walls of each tubular element, specifically in the form of a time and/or space curve (analogue or digital) representing the trend of the intensity of reading performed by the detector over the entire period in which the end portion of the tubular element moves past the front of the detector.

The curve obtained with this method has a number of peaks equal to the number of times the detector intercepts a wall of the tubular element: the wider (larger) the peak, the thicker the wall.

The device also comprises a control unit connected to the detector and configured to process the signal to obtain qualitative information regarding the structural integrity of the tubular element.

The invention also comprises processing the signal to identify at least one (preferably all) of the following:
- number of peaks of the curve;
- amplitude of the peaks of the curve;
- position and/or distance between the peaks of the curve.

Comparing the number of peaks with a reference value makes it possible to determine whether the tubular element meets minimum acceptability quality requirements.

Comparing the amplitude and/or the position and/or the mutual distance of the peaks with respective reference intervals makes it possible, in this case too, to determine whether or not the tubular element meets minimum acceptability quality requirements.

Preferably, the detection station comprises a plurality of detectors positioned in such a way as to detect respective parallel bands of the tubular elements during the transversal feeding of the tubular elements.

In an embodiment, the detectors are aligned in a direction perpendicular to the feed direction of the tubular element so they all perform detection on the same tubular element at the same time.

In a different embodiment, the detectors are disposed in such a way as to perform detection on successive tubular elements at the same time instant. In this case, therefore, the detectors are staggered from each other along the feed direction of the tubular element. Preferably, there are three detectors.

### Brief description of the drawings

Further features and advantages of this invention are more apparent in the exemplary, hence non-limiting description of a preferred but non-exclusive embodiment of a method and a device for inspecting tubular elements, in particular multi-layer tubular elements, as illustrated in the accompanying drawings, in which:
- Figure 1 is a schematic top view of the inspection device according to the invention;
- Figure 2 is a schematic front view of the inspection device according to the invention;
- Figure 3 is a front view of a first tubular element suitable for inspection by the device of Figures 1 and 2;
- Figures 3A-3C are detection curves obtained by inspecting the tubular element of Figure 3 with the inspection device according to the invention;
- Figure 4 is a front view of a second tubular element suitable for inspection by the device of Figures 1 and 2;
- Figures 4A-4C are detection curves obtained by inspecting the tubular element of Figure 4 with the inspection device according to the invention;
- Figure 5 is a front view of a third tubular element suitable for inspection by the device of Figures 1 and 2;
- Figures 5A-5C are detection curves obtained by inspecting the tubular element of Figure 5 with the inspection device according to the invention;
- Figure 6 is a front view of a fourth tubular element suitable for inspection by the device of Figures 1 and 2;
- Figures 6A-6C are detection curves obtained by inspecting the tubular element of Figure 6 with the inspection device according to the invention;
- Figure 7 is a schematic top view of the inspection device according to the invention used with tubular elements of the kind shown in Figure 6;
- Figure 8 is a schematic top view of the inspection device according to the invention used with tubular elements of the kind shown in Figure 9;
- Figure 9 is a front view of a further tubular element suitable for inspection by the device of Figures 1 and 2;
- Figures 9A-9C are detection curves obtained by inspecting the tubular element of Figure 9 with the inspection device according to the invention.

### Detailed description of preferred embodiments of the invention

This invention relates to a device for inspecting tubular elements, in particular, but not limited to, the sector of smoke or aerosol generating articles (tobacco or related sectors - cigars, cigarettes, electronic cigarettes and the like).

More specifically, the invention is applicable in the field of inspection of multi-layer tubular elements, comprising at least two superposed layers such as, for example, what are known as "filter tubes" where, for example, the outer layer is made of paper material and the inner layer is made of filter material.

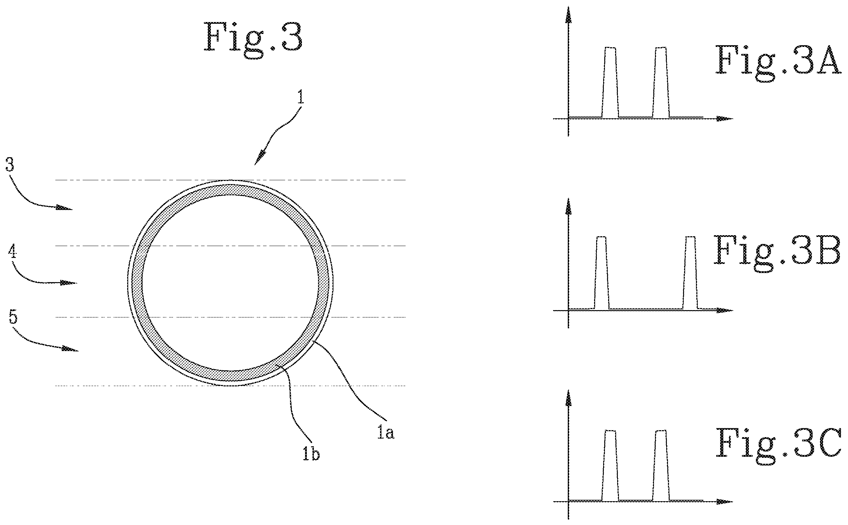

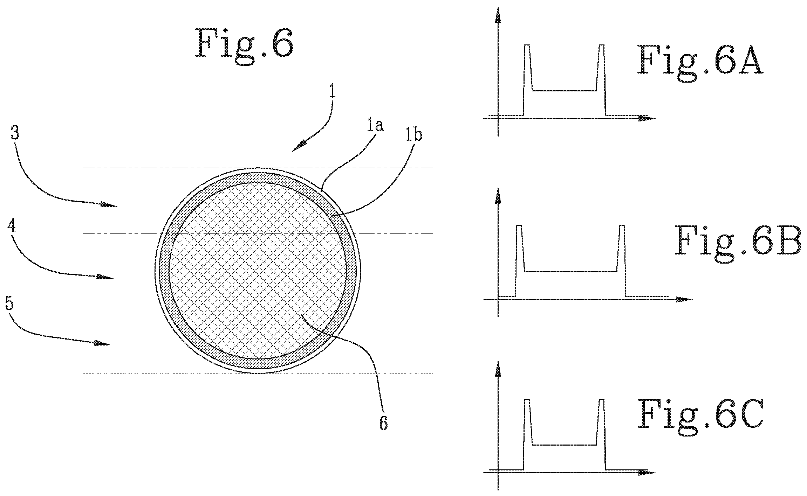

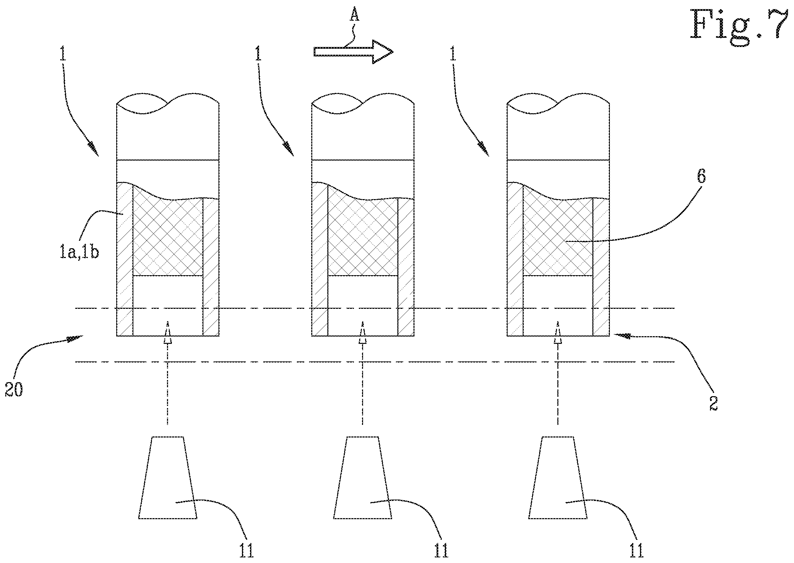

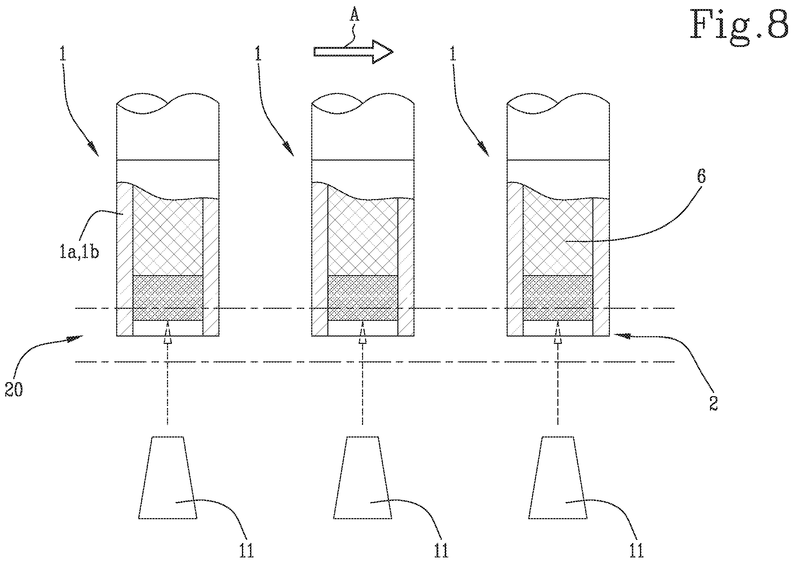

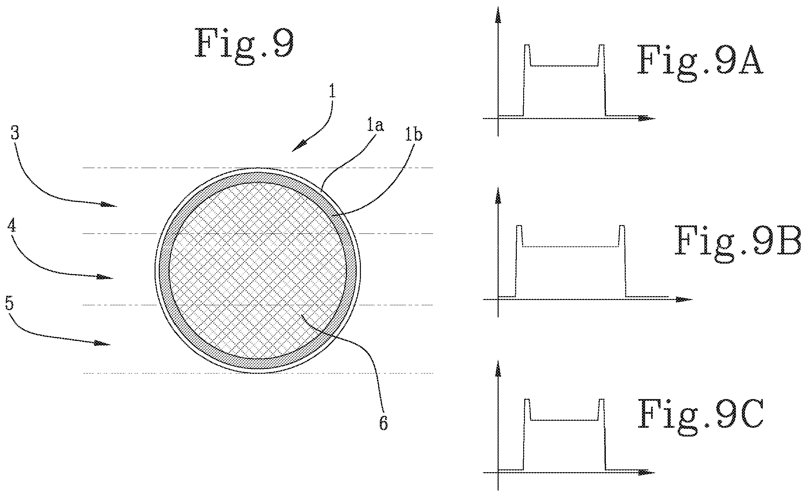

The tubular element, denoted by the numeral 1 in the accompanying drawings, has an internal cavity, preferably passing all the way through it, which may be empty or at least partly filled with a filling material (for example, acetate). The embodiments of Figures 3-5 refer to empty tubular elements, whilst the embodiment of Figures 6 and 7 is partly filled, where all but the end portion 2, which is the site of inspection, is filled. Also partly filled is the embodiment of Figures 8 and 9, where all but the end portion 2 is filled; these two drawings differ from Figures 6 and 7 in that inspection is not limited to the end portion 2; this concept is explained in more detail below.

The invention applies without distinction to both of the above mentioned embodiments and may also apply to isolated tubular element, as well as to tubular elements that are applied to other segments (for example, to complete cigarettes having a tubular element at the end of them).

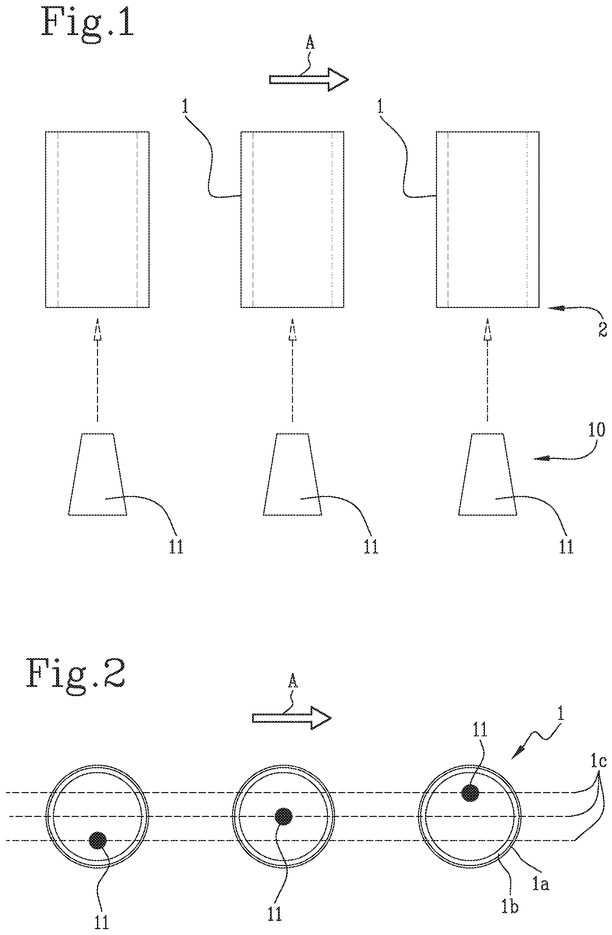

As shown in Figure 2 and in Figures 3-6, the tubular element 1 comprises an outer layer 1a and an inner layer 1b, adjacent to each other and preferably joined to each other by gluing.

In a qualitatively optimal solution, visible in Figure 3, both the layers 1a, 1b are circular in shape and are fully adherent to each other.

Figure 1 schematically shows the device according to the invention, which comprises a detection station 10 equipped with one or more detectors 11 configured to inspect an end portion 2 of each tubular element 1. The tubular elements 1 are fed forward by means of a conveyor (not illustrated), for example, a drum, a belt or other suitable form, provided with a succession of seats, oriented perpendicularly to a feed direction A, so the tubular elements 1 move along a feed path passing through the inspection station 10 (which is preferably stationary).

In the embodiment illustrated, the detection station 10 comprises three detectors 11 disposed one after the other and laterally staggered in such a way as to detect respective parallel bands 3, 4, 5 of the tubular elements 1 as the tubular elements 1 advance transversely. For this reason, the detectors 11 are laterally staggered to each other relative to the feed direction A so that the parallel bands 3, 4, 5 do not overlap or are not completely superposed on one another. In Figure 2, it is noted that each detector 11 lies on a respective detection line L1, which is spaced from the detection lines L2, L3 of the other detectors 11. Preferably, the detection lines L1, L2 and L3 are equispaced from each other.

In embodiments not illustrated, there may be a different number of detectors 11, in particular, one, two or more than three detectors.

Each detector 11 is embodied as an optical fibre sensor, facing a detection zone through which the tubular elements 1 pass in such a way that it directly faces the end portion 2 of each tubular element 1 and, more specifically, faces an annular surface 1c perpendicular to the axis of the tubular element. Preferably, each detector 11 is oriented with its detection axis parallel to the longitudinal axes (or main axes of extension or axes of symmetry) of the tubular elements 1.

When a tubular element 1 moves past it, each detector 11 generates an identification signal indicating that detection has been performed and sends the signal to a control unit (not illustrated).

According to the invention, the step of generating the signal is performed by generating a signal representing the walls of the tubular element 1, that is to say, a signal whose intensity is a function of (for example, is directly proportional to) the thickness of the walls that cross the detection zone in front of the detector 11.

Next, the signal is sent to the control unit which processes it to obtain qualitative information regarding the structural integrity of the tubular element 1, in particular to check whether or not the structural integrity of the tubular element 1 falls within a range of acceptability.

According to the invention, each signal comprises a time and/or space curve describing the intensity of the reading performed by the detector 11.

The subsequent step of processing the signal comprises one or more of the following operations:
- identifying the number of peaks of the curve;
- identifying the amplitude of the peaks of the curve;
- identifying the position and/or distance between the peaks of the curve.

Next, the number of peaks is compared with a reference value corresponding to a tubular element that is fully conformant with the required quality standards so as to determine whether the tubular element 1 meets the minimum acceptability quality requirements. In the preferred embodiment, this reference value is two, as will become clearer below.

Furthermore, the amplitude and/or position and/or mutual distance of the peaks are compared with respective reference intervals corresponding to a tubular element that is fully conformant with the required quality standards so as to determine whether the tubular element 1 meets the minimum acceptability quality requirements.

Figures 3-6 show different situations that may arise during a production process of the tubular elements.

Figure 3 illustrates a tubular element 1 having full structural integrity, hence fully conformant with a standard of acceptability. In particular, both the layers 1a and 1b are perfectly circular and adherent to each other.

Figures 3A-3C show the signals generated by the three detectors associated with the three parallel bands 3, 4, 5. These graphs are "intensity versus time" or "intensity versus space" curves (totally analogous if the feed speed of the tubular elements is constant).

It is specified that each detector 11 generates a signal identifying a slice of the tubular element. In other words, the first detector 11, which is associated with the parallel band 3 generates a signal identifying a slice of tubular element included in the parallel band 3. Similarly, the second detector 11, which is associated with the parallel band 4, generates a signal identifying a slice of tubular element included in the parallel band 4 and the third detector 11, which is associated with the parallel band 5, generates a signal identifying a slice of tubular element included in the parallel band 5.

In particular, the outer bands 3, 5 have two peaks corresponding to the detection by the respective detector, of the two walls moving past the detectors 11. The middle band also has two peaks but further apart because two walls moving in front of the middle detector 11 are further apart (diametrically opposite).

Since the number of peaks detected is two for each detector 11, it follows that there are no other walls along the bands 3, 4, 5 covered by the detectors 11, indicating that the tubular element is perfectly circular, both inside and out.

With reference also to the distances between the peaks, it may be said that they correspond to a tubular element that is conformant, since the peaks are closer together for the outer detectors 11 and further apart for the middle detector 11.

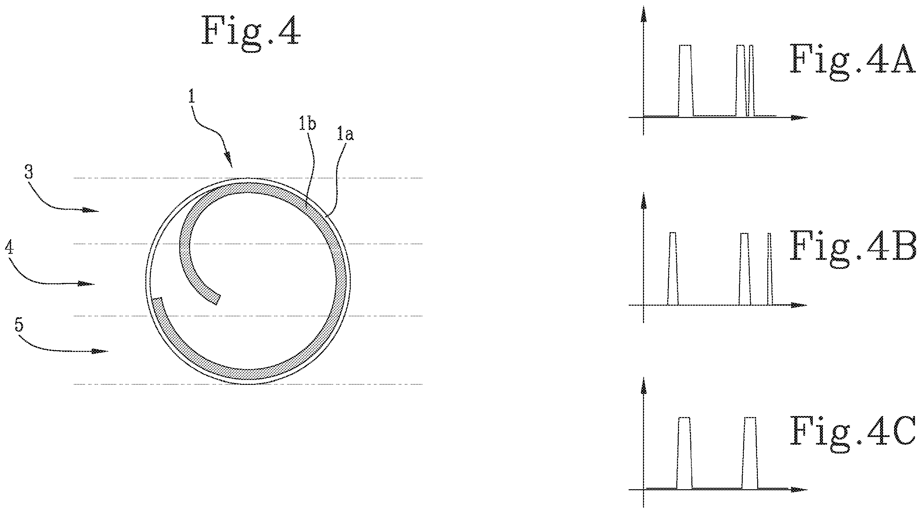

Figure 4 shows a defective tubular element 1, where the inner layer 1b has come loose, creating an inward bending flap, hence non-conformant with a standard of acceptability.

Figures 4A-4C show the signals generated by the three detectors associated with the three parallel bands 3, 4, 5 of Figure 4.

In particular, the upper band 3 is associated with detection by the respective detector 11 and the related curve has three output peaks: a first peak, corresponding to the front wall of the tubular element 1, has the correct shape, and two output peaks indicating that two distinct walls have been detected, thus identifying a problem caused by detachment.

The situation is the same for the curve related to the middle reading, although the positions and distances are different (Figure 4B).

The curve related to the bottom reading, on the other hand, is conformant because the bottom band 5 is not affected by the detached portion of the inner layer 1b.

In this situation, the control unit detects a non-conformant number of peaks and also that the distances between them does not fall within a predetermined interval corresponding to a conformant tubular element. In this case, therefore, the control unit can perform a further step, for example, a step of rejecting or of associating the specific position of that tubular element 1 in the conveying line with a "non conformant tubular element" label allowing other devices downstream to identify and reject the defective tubular element 1.

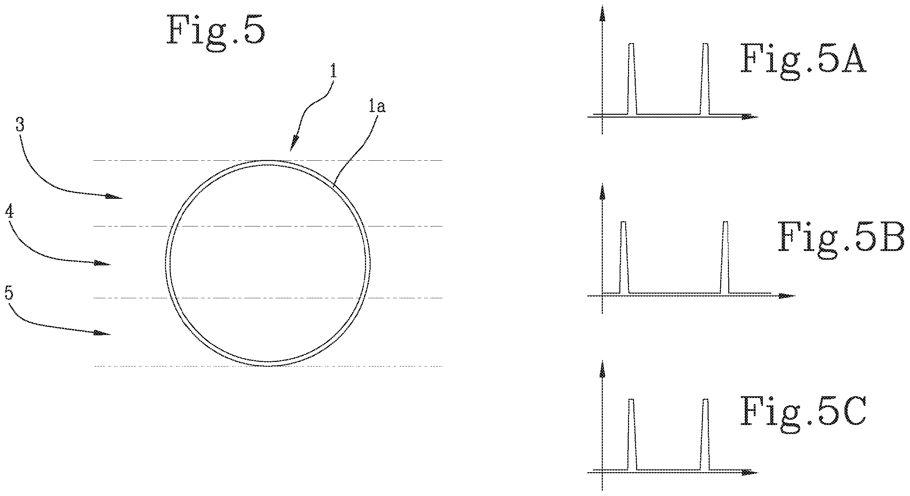

Figure 5 shows a defective tubular element 1, where the inner layer 1b is missing, thus creating a tubular element 1 with a cylindrical wall of insufficient thickness all the way round it.

Figures 5A-5C show the signals generated by the three detectors associated with the three parallel bands 3, 4, 5 of Figure 5.

In particular, all the curves have the correct number of peaks, that is, two peaks, indicating that there are no loose parts. The information regarding the defectiveness is, in this case, obtained by analysing the amplitude of the peaks, which is less than the expected interval (single thickness instead of double thickness) and/or their distances apart, which is slightly greater than it would be in the case of a correct, double thickness. In this case, too, therefore, the control unit determines a condition of non-acceptability of the tubular element and proceeds to rejecting it or associating it with a non-conformant tubular element label.

Figures 6 and 7 illustrate an alternative embodiment, where the tubular elements 1 have, in the cavity inside them, a filling 6 which is defined, for example, by a segment of acetate (in the case of a tubular filtering element) which partly fills the cavity but leaves the end portion 2 free to be inspected.

Figures 6A-6C show the signals generated by the three detectors associated with the three parallel bands 3, 4, 5 of Figure 6.

In this case, the situation is very similar to that of Figures 3A-3C and differs in that the zone between the peaks does not have a reading near zero but a reading greater than zero, although still lower than the peaks, since the detectors 11 are affected by the presence of the filling.

To reduce the effect of the filling as much as possible and to optimize the efficiency of detection of the walls, according to the invention, each detector 11, or each optical fibre sensor, may comprise one or more focusing lenses for determining a field depth of the detection. That way, detection can be concentrated in a detection zone 20 (Figure 7) of predetermined axial amplitude, thereby limiting the noise effect caused by the filling 6. This focusing feature may also be used in cases where the tubular element is empty.

Preferably, also, the mutual position between each detector 11 and the respective tubular elements 1 can be adjusted along the longitudinal axis of each tubular element 1 and/or perpendicularly to that axis, for example in a Cartesian plane perpendicular to that axis or perpendicularly to the feed direction A.

Figures 8 and 9 illustrate an embodiment similar to that shown in Figures 6 and 7, but where no use is made of instruments for concentrating the detection zone 20 in the stretch of tubular element 1 not affected by the filling. In effect, Figures 9A-9C show that the reading corresponding to the zone between the peaks is greater than that of Figures 6A-6C (albeit lower than the peaks) since the detectors 11 are affected by the filling to a greater extent. Thus, the device of this invention can be used with this embodiment of the tubular element 1 as well; the signals, obtained, however, are more difficult to read.

If no zone of the tubular element were free of filling, the signals obtained would be square in shape and it would not be possible to distinguish any peaks.

The invention achieves the preset aims, overcoming the disadvantages of the prior art.

In effect, the structure of the device is simple and requires little space. This is due to the use of optical fibre sensors which are very small in size and which have the advantage of being able to be installed in parts of the plant where free space is very limited.

Moreover, detection in parallel bands allows improving detection precision by increasing the number of optical fibre sensors so as to be able to detect even very minor defects.

## Claims

1. A method for inspecting tubular elements (1), in particular multi-layer tubular elements, comprising the steps of:
- feeding a tubular element (1) transversely to its main axis of extension through an inspection station (10) comprising at least one detector (11), in such a way that as the tubular element (1) advances, the detector (11) faces an end portion (2) of the tubular element (1), wherein the tubular element (1) has a cavity that is empty or partly filled with a filling material;
- detecting said end portion (2) of the tubular element (1) by means of said detector (11);
- generating, using said detector (11), a signal identifying the detection performed;
said detector (11) comprising an optical fibre sensor having a detection axis substantially parallel to said axis of the tubular element (1), in that said step of generating the signal is performed by generating a signal representing the walls of the tubular element (1), and in that it also comprises a step of processing said signal to obtain qualitative information regarding the structural integrity of the tubular element (1);
whereby said signal comprises a time and/or space curve describing the intensity of the reading performed by said detector (11) and wherein the step of processing the signal comprises one or more of the following steps:
- identifying the number of peaks in said curve;
- identifying the amplitude of the peaks of said curve;
- identifying the position and/or distance between the peaks of said curve; and whereby at least the end portion (2) of the tubular element (1) is without filling.

2. The method according to claim 1, wherein said detection station (10) comprises a plurality of detectors (11) positioned in such a way as to detect respective parallel bands (3, 4, 5) of the tubular element (1) during the transversal feeding of the tubular element (1).

3. The method according to claim 2, wherein said step of processing the signal to obtain qualitative information on the structural integrity of the tubular element (1) is performed for each of said detectors (11) and wherein the method comprises subjecting the tubular element (1) to a further step, preferably a rejection step, if at least one of the detectors (11) detects qualitative information of insufficient structural integrity.

4. The method according to claim 1, wherein said step of processing the signal also comprises a step of comparing said number of peaks with a reference value in such a way as to determine whether the tubular element (1) meets minimum acceptability quality requirements, preferably said reference value being equal to two.

5. The method according to claim 4, wherein said step of processing the signal also comprises a step of comparing said amplitude and/or said position and/or said reciprocal distance of the peaks with respective reference intervals in such a way as to determine whether the tubular element (1) meets minimum acceptability quality requirements.

6. The method according to any one of the preceding claims, wherein said step of detecting the end portion (2) of the tubular element (1) is accomplished by adjusting a mutual positioning between the detector (11) and the tubular element (1) along said axis of the tubular element (1) and/or perpendicularly to said axis of the tubular element (1).

7. A device for inspecting tubular elements, each provided with an internal cavity that is empty or partly filled with filling material, in particular multi-layer tubular elements, comprising a conveyor equipped with peripheral seats for feeding a succession of tubular elements (1) transversely to the main axes of extension of the tubular elements (1) along a feed path, an inspection station (10) positioned on the feed path and comprising at least one detector (11) positioned and/or configured in such a way that during the feeding of the tubular elements (1) the detector (11) faces an end portion (2) of each tubular element (1), preferably without filling, and a control unit connected to said at least one detector (11);
said detector (11) comprising an optical fibre sensor having a detection axis which is substantially parallel to said axes of the tubular elements (1), and in that said at least one detector (11) is configured to generate a signal representing the walls of each tubular element (1), and in that said control unit is configured to process said signal to obtain qualitative information regarding the structural integrity of the tubular element (1);
whereby the signal generated by said at least one detector (11) comprises a time and/or space curve describing the intensity of the reading performed by said detector (11) and wherein the control unit is configured to process the signal in such a way as to identify at least one of the following:
- the number of peaks of said curve;
- the amplitude of the peaks of said curve;
- the position and/or distance between the peaks of said curve.

8. The device according to claim 7, wherein said detection station comprises a plurality of detectors (11) positioned in such a way as to detect respective parallel bands (3, 4, 5) of the tubular elements (1) during the transversal feeding of the tubular elements (1).

9. The device according to claim 7 or 8, wherein the control unit is also configured for comparing the number of peaks with a reference value in such a way as to determine whether each tubular element (1) meets minimum acceptability quality requirements, preferably said reference value being equal to two.

10. The device according to any of the preceding claims 7 to 9, wherein the control unit is also configured to compare said amplitude and/or said position and/or said reciprocal distance of the peaks with respective reference intervals in such a way as to determine whether each tubular element (1) meets minimum acceptability quality requirements.

11. The device according to any one of claims 7 to 10, wherein said optical fibre sensor comprises one or more focusing lenses for determining a field depth of the detection.

## Patentansprüche

1. Verfahren zur Inspektion von rohrförmigen Elementen (1), insbesondere mehrlagigen rohrförmigen Elementen, umfassend die folgenden Schritte:
- Zuführen eines rohrförmigen Elements (1) quer zu seiner Haupterstreckungsachse durch eine Inspektionsstation (10), umfassend mindestens einen Detektor (11), so dass der Detektor (11) beim Vorrücken des rohrförmigen Elements (1) einem Endabschnitt (2) des rohrförmigen Elements (1) zugewandt ist, wobei das rohrförmige Element (1) einen Hohlraum aufweist, der leer oder teilweise mit einem Füllmaterial gefüllt ist;
- Detektieren des Endabschnitts (2) des rohrförmigen Elements (1) mittels des Detektors (11);
- Erzeugen eines Signals, das die durchgeführte Detektion identifiziert, unter Verwendung des Detektors (11);
wobei der Detektor (11) einen optischen Fasersensor umfasst, dessen Detektionsachse im Wesentlichen parallel zur Achse des rohrförmigen Elements (1) verläuft, wobei der Schritt zum Erzeugen des Signals durch Erzeugen eines Signals durchgeführt wird, das die Wände des rohrförmigen Elements (1) darstellt, und wobei es ferner einen Schritt zum Verarbeiten des Signals umfasst, um qualitative Informationen über die strukturelle Integrität des rohrförmigen Elements (1) zu erhalten; wobei das Signal eine Zeit- und/oder Raumkurve umfasst, die die Intensität der von dem Detektor (11) durchgeführten Ablesung beschreibt, und wobei der Schritt zum Verarbeiten des Signals einen oder mehrere der folgenden Schritte umfasst:
- Identifizieren der Anzahl von Spitzen in der Kurve;
- Identifizieren der Amplitude der Spitzen der Kurve;
- Identifizieren der Position und/oder des Abstands zwischen den Spitzen der Kurve;
und wobei mindestens der Endabschnitt (2) des rohrförmigen Elements (1) ohne Füllung ist.

2. Verfahren nach Anspruch 1, wobei die Detektionsstation (10) eine Vielzahl von Detektoren (11) umfasst, die so positioniert sind, dass sie während der Querzuführung des rohrförmigen Elements (1) jeweilige parallele Bänder (3, 4, 5) des rohrförmigen Elements (1) detektieren.

3. Verfahren nach Anspruch 2, wobei der Schritt zum Verarbeiten des Signals, um qualitative Informationen über die strukturelle Integrität des rohrförmigen Elements (1) zu erhalten, für jeden der Detektoren (11) durchgeführt wird und wobei das Verfahren das Unterziehen des rohrförmigen Elements (1) einem weiteren Schritt, vorzugsweise einem Aussortierungsschritt, umfasst, wenn mindestens einer der Detektoren (11) qualitative Informationen über eine unzureichende strukturelle Integrität detektiert.

4. Verfahren nach Anspruch 1, wobei der Schritt zum Verarbeiten des Signals ferner einen Schritt zum Vergleichen der Anzahl von Spitzen mit einem Referenzwert umfasst, um zu bestimmen, ob das rohrförmige Element (1) Mindestanforderungen an die Akzeptanzqualität erfüllt, wobei der Referenzwert vorzugsweise gleich zwei ist.

5. Verfahren nach Anspruch 4, wobei der Schritt zum Verarbeiten des Signals ferner einen Schritt zum Vergleichen der Amplitude und/oder der Position und/oder des gegenseitigen Abstands der Spitzen mit entsprechenden Referenzintervallen umfasst, um zu bestimmen, ob das rohrförmige Element (1) Mindestanforderungen an die Akzeptanzqualität erfüllt.

6. Verfahren nach einem der vorhergehenden Ansprüche, wobei der Schritt zum Detektieren des Endabschnitts (2) des rohrförmigen Elements (1) durch Einstellen einer gegenseitigen Positionierung zwischen dem Detektor (11) und dem rohrförmigen Element (1) entlang der Achse des rohrförmigen Elements (1) und/oder senkrecht zur Achse des rohrförmigen Elements (1) durchgeführt wird.

7. Vorrichtung zur Inspektion von rohrförmigen Elementen, die jeweils mit einem inneren Hohlraum versehen sind, der leer oder teilweise mit Füllmaterial gefüllt ist, insbesondere mehrlagigen rohrförmigen Elementen, umfassend einen Förderer, der mit umfangsseitigen Sitzen zum Zuführen einer Folge von rohrförmigen Elementen (1) quer zu den Haupterstreckungsachsen der rohrförmigen Elemente (1) entlang eines Zuführwegs ausgestattet ist, eine auf dem Zuführweg angeordnete Inspektionsstation (10) und umfassend mindestens einen Detektor (11), der so positioniert und/oder ausgelegt ist, dass der Detektor (11) während der Zuführung der rohrförmigen Elemente (1) einem Endabschnitt (2) jedes rohrförmigen Elements (1), vorzugsweise ohne Füllung, zugewandt ist, und eine mit dem mindestens einen Detektor (11) verbundene Steuereinheit;
wobei der Detektor (11) einen optischen Fasersensor mit einer Detektionsachse umfasst, die im Wesentlichen parallel zu den Achsen der rohrförmigen Elemente (1) verläuft, und wobei der mindestens eine Detektor (11) so ausgelegt ist, dass er ein Signal erzeugt, das die Wände jedes rohrförmigen Elements (1) darstellt, und wobei die Steuereinheit so ausgelegt ist, dass sie das Signal verarbeitet, um qualitative Informationen über die strukturelle Integrität des rohrförmigen Elements (1) zu erhalten;
wobei das von dem mindestens einen Detektor (11) erzeugte Signal eine Zeit- und/oder Raumkurve umfasst, die die Intensität der von dem Detektor (11) durchgeführten Ablesung beschreibt, und wobei die Steuereinheit so ausgelegt ist, dass sie das Signal so verarbeitet, um mindestens eines der folgenden zu identifizieren:
- die Anzahl von Spitzen der Kurve;
- die Amplitude der Spitzen der Kurve;
- die Position und/oder der Abstand zwischen den Spitzen der Kurve.

8. Vorrichtung nach Anspruch 7, wobei die Detektionsstation eine Vielzahl von Detektoren (11) umfasst, die so positioniert sind, dass sie während der Querzuführung der rohrförmigen Elemente (1) jeweilige parallele Bänder (3, 4, 5) der rohrförmigen Elemente (1) detektieren.

9. Vorrichtung nach Anspruch 7 oder 8, wobei die Steuereinheit ferner so ausgelegt ist, dass sie die Anzahl von Spitzen mit einem Referenzwert vergleicht, um zu bestimmen, ob jedes rohrförmige Element (1) die Mindestanforderungen an die Akzeptanzqualität erfüllt, wobei der Referenzwert vorzugsweise gleich zwei ist.

10. Vorrichtung nach einem der vorhergehenden Ansprüche 7 bis 9, wobei die Steuereinheit ferner so ausgelegt ist, dass sie die Amplitude und/oder die Position und/oder den gegenseitigen Abstand der Spitzen mit entsprechenden Referenzintervallen vergleicht, um zu bestimmen, ob jedes rohrförmige Element (1) Mindestanforderungen an die Akzeptanzqualität erfüllt.

11. Vorrichtung nach einem der Ansprüche 7 bis 10, wobei der optische Fasersensor eine oder mehrere Fokussierlinsen zum Bestimmen einer Schärfentiefe der Detektion umfasst.

## Revendications

1. Procédé d'inspection d'éléments tubulaires (1), en particulier d'éléments tubulaires multicouches, comprenant les étapes de :
- alimenter un élément tubulaire (1) transversalement à son axe principal d'extension à travers un poste d'inspection (10) comprenant au moins un détecteur (11), de manière à ce que, lorsque l'élément tubulaire (1) avance, le détecteur (11) se trouve face à une portion d'extrémité (2) de l'élément tubulaire (1), dans lequel l'élément tubulaire (1) a une cavité qui est vide ou partiellement remplie d'un matériau de remplissage ;
- détecter ladite portion d'extrémité (2) de l'élément tubulaire (1) au moyen dudit détecteur (11) ;
- générer, à l'aide dudit détecteur (11), un signal identifiant la détection effectuée ;
ledit détecteur (11) comprenant un capteur à fibre optique ayant un axe de détection substantiellement parallèle audit axe de l'élément tubulaire (1), en ce que ladite étape de générer le signal est réalisée en générant un signal représentant les parois de l'élément tubulaire (1), et en ce qu'il comprend également une étape de traiter ledit signal pour obtenir des informations qualitatives concernant l'intégrité structurelle de l'élément tubulaire (1) ;
dans lequel ledit signal comprend une courbe temporelle et/ou spatiale décrivant l'intensité de la lecture effectuée par ledit détecteur (11) et dans lequel l'étape de traiter le signal comprend une ou plusieurs des étapes suivantes :
- identifier le nombre de pics dans ladite courbe ;
- identifier l'amplitude des pics de ladite courbe ;
- identifier la position et/ou la distance entre les pics de ladite courbe ;
et dans lequel au moins la portion d'extrémité (2) de l'élément tubulaire (1) est sans remplissage.

2. Procédé selon la revendication 1, dans lequel ledit poste de détection (10) comprend une pluralité de détecteurs (11) positionnés de manière à détecter des bandes parallèles respectives (3, 4, 5) de l'élément tubulaire (1) pendant l'alimentation transversale de l'élément tubulaire (1).

3. Procédé selon la revendication 2, dans lequel ladite étape de traiter le signal pour obtenir des informations qualitatives sur l'intégrité structurelle de l'élément tubulaire (1) est effectuée pour chacun desdits détecteurs (11) et dans lequel le procédé comprend la soumission de l'élément tubulaire (1) à une étape supplémentaire, de préférence une étape de rejeter, si au moins un des détecteurs (11) détecte des informations qualitatives d'intégrité structurelle insuffisante.

4. Procédé selon la revendication 1, dans lequel ladite étape de traiter le signal comprend également une étape de comparer ledit nombre de pics avec une valeur de référence de manière à déterminer si l'élément tubulaire (1) répond aux exigences minimales de qualité d'acceptabilité, de préférence ladite valeur de référence étant égale à deux.

5. Procédé selon la revendication 4, dans lequel ladite étape de traiter le signal comprend également une étape de comparer ladite amplitude et/ou ladite position et/ou ladite distance réciproque des pics avec des intervalles de référence respectifs de manière à déterminer si l'élément tubulaire (1) répond aux exigences minimales de qualité d'acceptabilité.

6. Procédé selon l'une quelconque des revendications précédentes, dans lequel ladite étape de détecter la portion d'extrémité (2) de l'élément tubulaire (1) est accomplie en ajustant un positionnement mutuel entre le détecteur (11) et l'élément tubulaire (1) le long dudit axe de l'élément tubulaire (1) et/ou perpendiculairement audit axe de l'élément tubulaire (1).

7. Dispositif d'inspection d'éléments tubulaires, chacun muni d'une cavité interne qui est vide ou partiellement remplie de matériau de remplissage, en particulier des éléments tubulaires multicouches, comprenant un convoyeur équipé de sièges périphériques pour alimenter une succession d'éléments tubulaires (1) transversalement aux axes principaux d'extension des éléments tubulaires (1) le long d'un chemin d'alimentation, un poste d'inspection (10) positionné sur le chemin d'alimentation et comprenant au moins un détecteur (11) positionné et/ou configuré de manière à ce que pendant l'alimentation des éléments tubulaires (1), le détecteur (11) se trouve face à une portion d'extrémité (2) de chaque élément tubulaire (1), de préférence sans remplissage, et une unité de commande reliée audit au moins un détecteur (11) ;
ledit détecteur (11) comprenant un capteur à fibre optique ayant un axe de détection qui est substantiellement parallèle auxdits axes des éléments tubulaires (1), et en ce que ledit au moins un détecteur (11) est configuré pour générer un signal représentant les parois de chaque élément tubulaire (1), et en ce que ladite unité de commande est configurée pour traiter ledit signal pour obtenir des informations qualitatives concernant l'intégrité structurelle de l'élément tubulaire (1) ;
dans lequel le signal généré par ledit au moins un détecteur (11) comprend une courbe temporelle et/ou spatiale décrivant l'intensité de la lecture effectuée par ledit détecteur (11) et dans lequel l'unité de commande est configurée pour traiter le signal de manière à identifier au moins l'un des éléments suivants :
- le nombre de pics de ladite courbe ;
- l'amplitude des pics de ladite courbe ;
- la position et/ou la distance entre les pics de ladite courbe.

8. Dispositif selon la revendication 7, dans lequel ledit poste de détection comprend une pluralité de détecteurs (11) positionnés de manière à détecter des bandes parallèles respectives (3, 4, 5) des éléments tubulaires (1) pendant l'alimentation transversale des éléments tubulaires (1).

9. Dispositif selon la revendication 7 ou 8, dans lequel l'unité de commande est également configurée pour comparer le nombre de pics avec une valeur de référence de manière à déterminer si chaque élément tubulaire (1) répond aux exigences minimales de qualité d'acceptabilité, de préférence ladite valeur de référence étant égale à deux.

10. Dispositif selon l'une quelconque des revendications précédentes 7 à 9, dans lequel l'unité de commande est également configurée pour comparer ladite amplitude et/ou ladite position et/ou ladite distance réciproque des pics avec des intervalles de référence respectifs de manière à déterminer si chaque élément tubulaire (1) répond aux exigences minimales de qualité d'acceptabilité.

11. Dispositif selon l'une quelconque des revendications 7 à 10, dans lequel ledit capteur à fibre optique comprend une ou plusieurs lentilles de focalisation pour déterminer une profondeur de champ de la détection.
